# EUROPÄISCHE PATENTSCHRIFT

(11) **EP 0 527 543 B1**
(45) Veröffentlichungstag und Bekanntmachung des Hinweises auf die Patenterteilung: **08.03.1995**
(21) Anmeldenummer: 92250214.1
(22) Anmeldetag: 11.08.1992
(51) Int. Cl.: B01D 29/09, B01D 29/66, B01D 29/68, B01D 33/04, B01D 33/50

(54) **Verfahren und Vorrichtung zum Reinigen von Filterbändern**
Process and device for cleaning filtering bands
Procédé et dispositif pour le nettoyage des foiles filtrantes

(30) Priorität: 12.08.1991 DE 4127057
(43) Veröffentlichungstag der Anmeldung: 17.02.1993
(73) Patentinhaber: MANNESMANN Aktiengesellschaft, 40027 Düsseldorf (DE)
(72) Erfinder: Koppers, Rudolf, W-5431 Horbach (DE); Probst, Günter, W-4000 Düsseldorf (DE); Krause, Peter, W-5800 Hagen 1 (DE); Triesch, Josef, W-4000 Düsseldorf (DE)
(74) Vertreter: Presting, Hans-Joachim, Dipl.-Ing.

(56) Entgegenhaltungen:
- EP-A- 0 228 210
- EP-A- 0 432 379
- DE-A- 611 918
- FR-A- 2 162 415
- FR-A- 2 390 191

## Beschreibung

Die Erfindung betrifft ein Verfahren und eine Vorrichtung zum Reinigen von Filterbändern, insbesondere in Bandfilteranlagen mit umlaufenden oder reversierbarem Filterband, bestehend aus einer in einer filterbandseitig offenen Kammer oberhalb des Filterbandes angeordneten Spülvorrichtung, mit der ein Spülmedium unter Druck auf und durch das Filterband gespritzt wird sowie einer unterhalb des Filterbandes und der Kammer angeordneten Auffangvorrichtung für das Spüldmedium, die zusammen mit dem auf ihren Rändern aufliegenden Filterband einer geschlossenen, mit einem Ablauf für das Spülmedium versehenen Kasten bildet, in dem ein Unterdruck zur Unterstützung des Durchdringens des Spülmediums durch das Filterband eingestellt wird.

Derartige Reinigungsvorrichtungen für Filterbänder in Bandfilteranlagen werden verwendet, um die Einsatzdauer von Filterbändern zu verlängern, um die Betriebskosten der Anlage zu verringern und die Entsorgungskosten niedrig zu halten. Außerdem soll durch die getroffenen Maßnahmen eine Schonung der Umwelt erreicht werden.

In den Poren der Filterbänder lagern sich mit der Zeit Verunreinigungen ein, die mit dem Filterkuchen nicht abgeführt werden können. Es ist zwar bereits versucht worden, diese Verunreinigungen durch Bürsten oder Abstreifen zu entfernen, doch haben sich entsprechende Vorrichtungen und Verfahren nicht bewährt.

Auch ein Abblasen des Filterbandes mit Druckluft hat nicht zu dem gewünschten Erfolg geführt, denn dabei wird die Umwelt durch entstehende Vernebelungen verschmutzt und durch starke Geräuschentwicklung gestört.

Eine bekannte Lösung (DE 37 25 651 C1) schlägt vor, das Filterband durch eine allseitig dicht verschlossene Kammer zu führen und dort eine Reinigung des Filterbandes mittels Spritzwasser vorzunehmen. Die Vorrichtung arbeitet mit hohem Flüssigkeitsdruck, bei dem eine gegenseitige Beeinflussung der Düsenstrahlen eine nicht optimale Reinigung des Filterbandes erwarten läßt. Die Störanfälligkeit der Düsen stellt einen weiteren Nachteil dar.

Schließlich ist durch die EP 0 191 102 B1 bekannt, einer Vorrichtung zum Reinigen von Filterbändern mit einer eingekammerten Spülvorrichtung eine Unterkammer zuzuordnen, in der ein Unterdruck zum Abziehen der das Band durchdringenden Flüssigkeit herrscht. Mit der bekannten Vorrichtung ist es jedoch nicht möglich, das gespülte Band im Anschluß an den Reinigungsvorgang zu trocknen, um auch letzte Spülmittelreste und Schmutzpartikel aus dem Band zu entfernen.

Aufgabe der vorliegenden Erfindung ist es, ein Verfahren und eine Vorrichtung zum Reinigen von Filterbändern zu schaffen, mit dem bzw. mit der das gespülte Band im Anschluß an den Reinigungsvorgang getrocknet werden kann und sich dabei Reste von Spülmitteln und Schmutz aus dem Band entfernen lassen.

Diese Aufgabe wird erfindungsgemäß dadurch gelöst, daß nach dem Spülen des Filterbandes zu dessen Trocknung Gas, vorzugsweise Umgebungsluft durch das Filterband gesaugt wird.
Vorrichtungen zur Durchführung des Verfahrens gehen aus den Ansprüchen 2 und 3 hervor.
Weitere Merkmale der Vorrichtungen sind in den Unteransprüchen 4-6 angegeben.

Der mit der Erfindung erzielte Vorteil ist im wesentlichen darin zu sehen, daß eine erhebliche Verlängerung der Einsatzdauer der Filterbänder bei geringen Betriebs- und Versorgungskosten erreicht und ein gleichmäßiges, sehr intensives Reinigen der Bänder ermöglicht wird.

Ein Ausführungsbeispiel der Erfindung ist in der Zeichnung dargestellt und wird nachfolgend beschrieben. Es zeigt:
- Fig. 1: einen Längsschnitt durch einen Bandfilter mit der erfindungsgemäßen Reinigungsvorrichtung,
- Fig. 2: einen Querschnitt durch den Bandfilter im Bereich der Spülvorrichtung,
- Fig. 3: eine alternative Ausführung der Erfindung im Querschnitt,
- Fig. 4 und 5: Querschnitte durch zwei alternative Spülvorrichtungen in grob vereinfachter Darstellung.

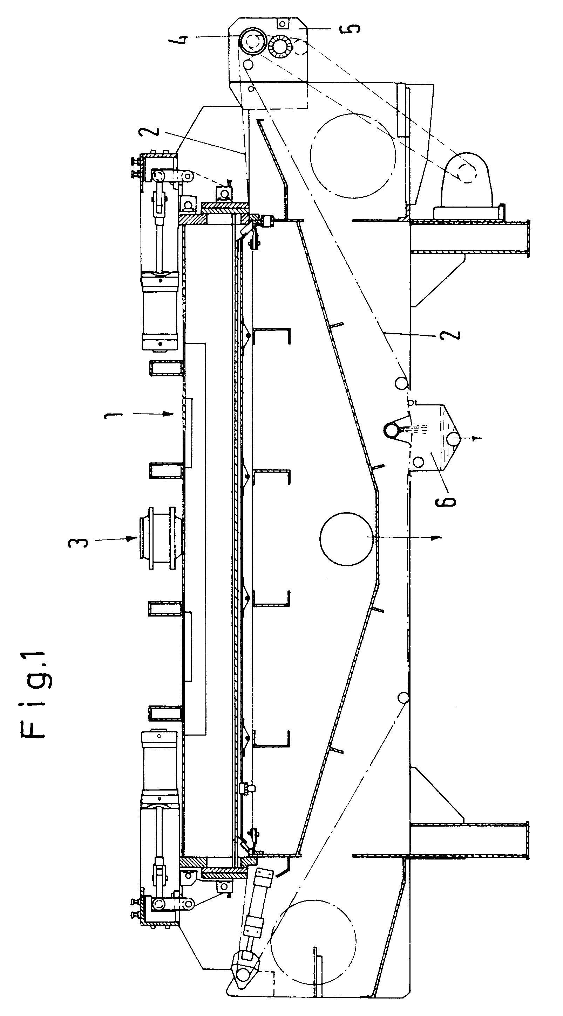

In Fig. 1 ist mit 1 eine Bandfilteranlage bezeichnet, in der das Filterband 2, vorzugsweise ein Gewebeband, umläuft. Das Filterband ist Träger für den sich bildenden Schmutzkuchen, der beim Durchleiten der bei 3 eingeleiteten Trübe durch das Filtermedium auf dem Filterband verbleibt. Der Schmutzkuchen wird bei 4 taktweise aus der Filteranlage ausgetragen und über einen Abstreifer 5 entsorgt.

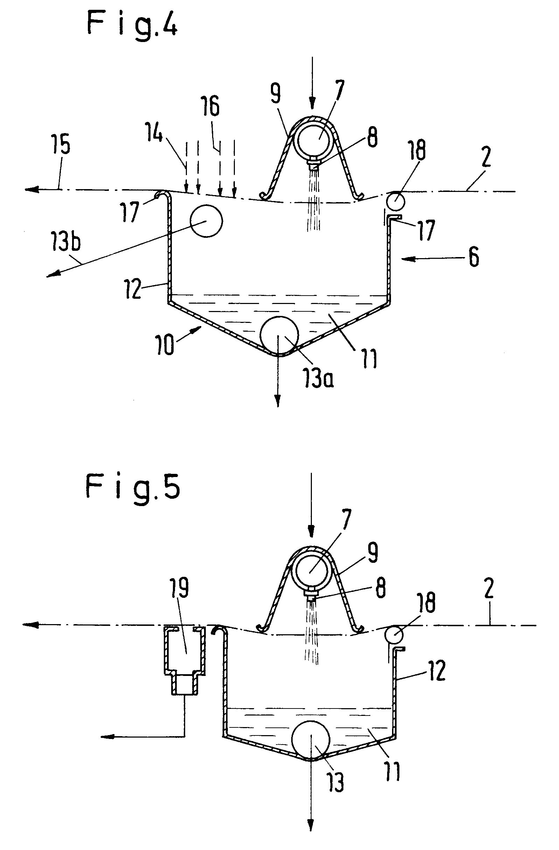

Zur Reinigung des umlaufenden Filterbandes 2 ist die Spülvorrichtung 6 im Untertrum des Filterbandes 2 angeordnet, wie sie in Fig. 4 in vergrößerter Darstellung zu erkennen ist. Sie besteht aus einem oberhalb des durch die Spüleinrichtung geführten Filterbandes 2 angeordneten Spülrohr 7 mit Düsen 8, durch die ein Spülmedium, im vorliegenden Fall Wasser, unter Druck auf die dem Spülrohr zugewandte Seite des Filterbandes 2 gepreßt wird. Durch eine Kammer 9 wird der seitlich des Spülrohres liegende Bereich abgeschottet, so daß ein intensives Spülen des Filterbandes 2 möglich ist.

Unterhalb des Filterbandes 2 ist eine Ablaufvorrichtung 10 für das Spülmedium 11 vorgesehen, die aus einem Kasten 12 besteht, der, bis auf seine dem Fillerband 2 zugewandte Seite, allseitig geschlossen ist. Der Kasten 12 weist an seiner tiefsten Stelle einen Ablauf 13a auf, durch den das Spülmittel abgefördert werden kann.

Des weiteren ist in dem Kasten 12 ein Absaugstutzen 13b vorgesehen, der mit einer Pumpe oder dergleichen zur Erzeugung eines Unterdruckes im Kasten 12 verbunden ist. Der Kasten 12 ist in seinen Abmessungen größer als die Kammer 9 um das Spülrohr 7, so daß sich ein Bereich 14 seitlich der Kammer 9 und in Transportrichtung 15 hinter dem Spülrohr 7 ergibt, der auf der Oberseite des Filterbandes 2 mit der Umgebungsluft in Verbindung steht. Durch den in dem Kasten 12 erzeugten Unterdruck wird, wie bei 16 angedeutet, Ungebungsluft durch das Gewebe bzw. die Poren des Filterbandes 2 hindurchgesaugt, wodurch eine endgültige Reinigung bei Trocknung des in der Kammer 9 gespülten Filterbandes stattfindet.

Um die infolge der Unterdruckwirkung in dem Kasten 12 auftretende Reibung zwischen dem Filterband 2 und den Kanten 17 des Kastens 12 zu verringern, ist bei 18 eine Führungsrolle dargestellt, die die Kante 17 ersetzt und das Band leitet.

In Fig. 5 ist eine alternative Darstellung der Spülvorrichtung gezeichnet, wobei gleiche Teile gleiche Positionsziffern tragen. Im Unterschied zu Fig. 4 ist seitlich neben dem Kasten 12 der Ablaufvorrichtung ein Absaugbalken 19 vorgesehen, der mittels Unterdruck die Trocknung und Nachreinigung des Filterbandes 2 übernimmt.

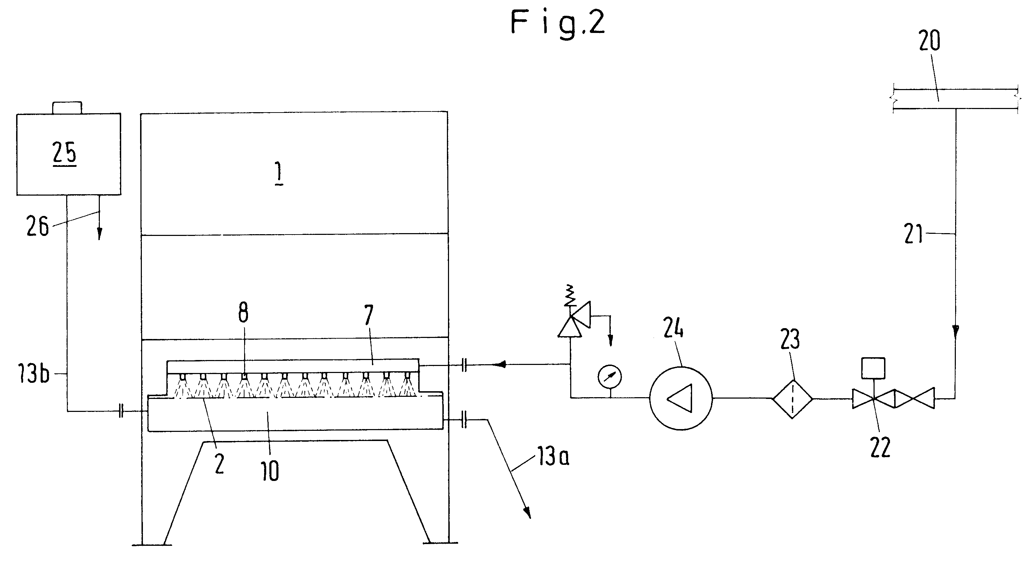

Wie in Fig. 2 dargestellt, wird vom Leitungsnetz 20 über die Leitung 21 und Absperrventile 22, einen Filter 23 das Spülmedium Wasser mittels einer Pumpe 24 in das Spülrohr 7 gedrückt, welches es durch die Düsen 8 mit einstellbarem Druck verläßt. Das bei 2 angedeutete Filterband wird intensiv abgespritzt, wobei die Flüssigkeit durch das Filterband 2 hindurch in die Auffangvorrichtung 10 gelangt, von wo es über den Ablauf 13 abgeleitet wird. Bei 25 ist ein Nebelabscheider dargestellt, in dem der bei 13b abgesaugte, aus Spülmittel, Luft und Schmutzpartikeln bestehende Nebel niedergeschlagen und bei 26 abgeführt wird.

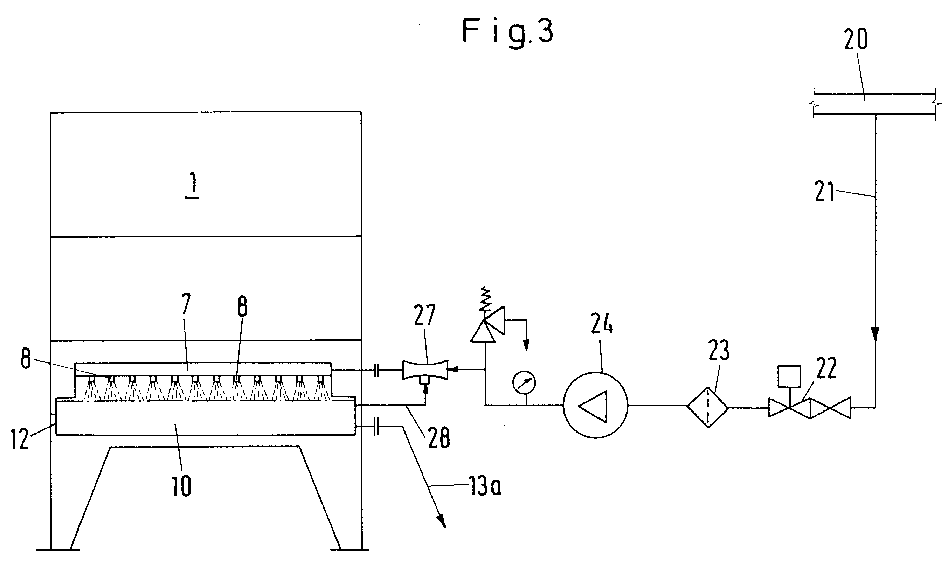

Fig. 3 zeigt eine ähnliche Einrichtung mit gleich bezeichneten Teilen. Im Unterschied zur vorstehend beschriebenen Lösung wird hier der Unterdruck in dem Kasten 12 der Auffangvorrichtung 10 mittels Ejektorwirkung des bei 27 dargestellten Ejektors erzeugt, in dem zwischen der das Spülmedium eindüsenden Leitung und einer Saugleitung 28 am Kasten 12 eine Verbindung hergestellt wird.

Ergänzend ist festzustellen, daß das Spülrohr 7 vorzugsweise mit einer Vielzahl von Düsen bestückt ist. Die Kammer 9 ist so gestaltet, daß das verschmutzte Filterband 2 über die Kanten der Kammer 9 schleifend geführt ist. Auch die Kanten 17 des Kastens 12 haben Kontakt mit dem Band, wobei wie vorstehend beschrieben die Einlaufkante des Kastens 12 als Rolle 18 gestaltet ist. Zusätzlich können nicht dargestellte seitliche Führungen und Abdichtungen des Bandes im Bereich des Ablaufkastens vorgesehen sein.

## Patentansprüche

1. Verfahren zum Reinigen von Filterbändern, insbesondere in Bandfilteranlagen mit umlaufendem oder reversierbarem Filterband, bestehend aus einer in einer filterbandseitig offenen Kammer oberhalb des Filterbandes angeordneten Spülvorrichtung, mit der ein Spülmedium unter Druck auf und durch das Filterband gespritzt wird, sowie einer unterhalb des Filterbandes und der Kammer angeordneten Auffangvorrichtung für das Spülmedium, die zusammen mit dem auf ihren Rändern aufliegenden Filterband einen geschlossenen, mit einem Ablauf für das Spülmedium versehenen Kasten bildet, in dem ein Unterdruck zur Unterstützung des Durchdringens des Spülmediums durch das Filterband eingestellt wird,
dadurch gekennzeichnet, daß
nach dem Spülen des Filterbandes zu dessen Trocknung Gas, vorzugsweise Umgebungsluft durch das Filterband gesaugt wird.

2. Vorrichtung zur Durchführung des Verfahren nach Anspruch 1, insbesondere in Bandfilteranlagen mit umlaufendem oder reversierbarem Filterband (2), bestehend aus einer in einer filterbandseitig offenen Kammer (9) oberhalb des Filterbandes angeordneten Spülvorrichtung (7), mit der ein Spülmedium (11) unter Druck auf und durch das Filterband gespritzt wird, sowie einer unterhalb des Filterbandes und der Kammer angeordneten Auffangvorrichtung (10) für das Spülmedium, die zusammen mit dem auf ihren Rändern aufliegenden Filterband einen geschlossenen, mit einem Ablauf (13) für das Spülmedium versehenen Kasten (12) bildet, in dem ein Unterdruck zur Unterstützung des Durchdringens des Spülmediums durch das Filterband eingestellt wird,
dadurch gekennzeichnet,
daß in Durchlaufrichtung des Filterbandes hinter der Kammer (9) auf der der Auffangvorrichtung (10) abgewandten Seite des Filterbandes und neben dem Kasten (12) mindestens eine sich quer über die Breite des Filterbandes (2) erstreckende Absaugevorrichtung (19) zur Trocknung des Filterbandes vorgesehen ist.

3. Vorrichtung zur Durchführung des Verfahrens nach Anspruch 1, insbesondere in Bandfilteranlagen mit umlaufendem oder reversierbarem Filterband (2), bestehend aus einer in einer filterbandseitig offenen Kammer (9) oberhalb des Filterbandes angeordneten Spülvorrichtung (7), mit der ein Spülmedium (11) unter Druck auf und durch das Filterband gespritzt wird, sowie einer unterhalb des Filterbandes und der Kammer angeordneten Auffangvorrichtung (10) für das Spülmedium, die zusammen mit dem auf ihren Rändern aufliegenden Filterband einen geschlossenen, mit einem Ablauf für das Spülmedium versehenen Kasten (12) bildet, in dem ein Unterdruck zur Unterstützung des Durchdringens des Spülmediums durch das Filterband eingestellt wird,
dadurch gekennzeichnet,
daß die filterbandseitige Öffnung des Kastens (12) der Auffangvorrichtung in Durchlaufrichtung des Filterbandes (2) hinter der Spülvorrichtung (7) größer als die filterbandseitige Öffnung der oberhalb des Filterbandes (2) vorgesehenen, die Spülvorrichtung (7) umgebenden Kammer (9) ist.

4. Vorrichtung nach Anspruch 2,
dadurch gekennzeichnet,
daß die Absaugvorrichtung (19) ein Absaugbalken ist, über dessen Saugöffnung das Filterband (2) dichtend geführt ist.

5. Vorrichtung nach einem der Ansprüche 2-4,
dadurch gekennzeichnet,
daß mindestens die einlaufseitige Kante (17) des Kastens (12) der Auffangvorrichtung (10) als Führungsrolle (18) für das Filterband (2) ausgeführt ist.

6. Vorrichtung nach einem der Ansprüche 2-5,
dadurch gekennzeichnet,
daß als Spülmedium Flüssigkeit, Luft oder Luft-Flüssigkeitsgemisch vorgesehen ist.

## Claims

1. Process for cleaning filtering bands, in particular in band filter plant with a circulating or reversible filtering band, consisting of a rinsing device arranged in a chamber, which is open on the filtering band side, above the filtering band, by means of which device a rinsing medium is sprayed under pressure onto and through the filtering band, and of a collecting device for the rinsing medium which is arranged below the filtering band and the chamber and which, together with the filtering band lying on its edges, forms a closed tank which is provided with a drain for the rinsing medium and in which an underpressure is produced to assist the penetration of the rinsing medium through the filtering band, characterised in that gas, preferably ambient air, is sucked through the filtering band after it has been rinsed in order to dry it.

2. Device for carrying out the process according to claim 1, in particular in band filter plant with a circulating or reversible filtering band (2), consisting of a rinsing device (7) arranged in a chamber (9), which is open on the filtering band side, above the filtering band, by means of which device a rinsing medium (11) is sprayed under pressure onto and through the filtering band, and of a collecting device (10) for the rinsing medium which is arranged below the filtering band and the chamber and which, together with the filtering band lying on its edges, forms a closed tank (12) which is provided with a drain (13) for the rinsing medium and in which an underpressure is produced to assist the penetration of the rinsing medium through the filtering band, characterised in that at least one suction device (19), which extends transversely over the width of the filtering band (2), is provided after the chamber (9) in the direction of movement of the filtering band on the side of the filtering band (2) which is distant from the collecting devise (10) and close to the tank (12) in order to dry the filtering band.

3. Device for carrying out the process according to claim 1, in particular in band filter plant with a circulating or reversible filtering band (2), consisting of a rinsing device (7) arranged in a chamber (9), which is open on the filtering band side, above the filtering band, by means of which device a rinsing medium (11) is sprayed under pressure onto and through the filtering band, and of a collecting device (10) for the rinsing medium which is arranged below the filtering band and the chamber and which, together with the filtering band lying on its edges, forms a closed tank (12) which is provided with a drain for the rinsing medium and in which an underpressure is produced to assist the penetration of the rinsing medium through the filtering band, characterised in that the opening, which is on the filter band side, in the tank (12) of the collecting device after the rinsing device (7) in the direction of movement of the filtering band (2) is greater than the opening, on the filter band side, in the chamber (9) which is provided above the filtering band (2) and surrounds the rinsing device (7).

4. Device according to claim 2, characterised in that the suction device (19) is a suction beam over the suction opening of which the filtering band (2) is tightly guided.

5. Device according to one of claims 2 - 4, characterised in that at least the edge (17) of the tank (12) of the collecting device (10) which is on the feed side is formed as a guide roller (18) for the filtering band (2).

6. Device according to one of claims 2 - 5, characterised in that liquid, air or an air-liquid mixture is provided as the rinsing medium.

## Revendications

1. Procédé pour nettoyer des bandes de filtrage, en particulier dans des installations de filtrage par bande munies d'une bande de filtrage rotative ou réversible, comportant un dispositif de rinçage agencé au-dessus de la bande de filtrage dans une chambre ouverte du côté de la bande de filtrage, au moyen duquel un fluide de rinçage sous pression est projeté sur et à travers la bande de filtrage, ainsi qu'un dispositif de réception pour le fluide de rinçage agencé au-dessous de la bande de filtrage et de la chambre, qui forme conjointement avec la bande de filtrage reposant sur ses bords un caisson fermé pourvu d'une sortie pour le fluide de rinçage, dans lequel est engendrée une dépression pour favoriser le passage du fluide de rinçage à travers la bande de filtrage,
caractérisé en ce qu'après le rinçage de la bande de filtrage, du gaz, de préférence de l'air environnant, est aspiré à travers la bande de filtrage pour son séchage.

2. Dispositif pour la mise en oeuvre du procédé selon la revendication 1, en particulier dans des installations de filtrage par bande comportant une bande de filtrage (2) rotative ou réversible, constitué d'un dispositif de rinçage (7) agencé au-dessus de la bande de filtrage dans une chambre (9) ouverte du côté de la bande de filtrage, au moyen duquel un fluide de rinçage (11) sous pression est projeté sur et à travers la bande de filtrage, ainsi que d'un dispositif de réception (10) pour le fluide de rinçage agencé au-dessous de la bande de filtrage et de la chambre, qui forme conjointement avec la bande de filtrage reposant sur ses bords un caisson fermé (12) pourvu d'une sortie (13) pour le fluide de rinçage, dans lequel est engendrée une dépression pour favoriser le passage du fluide de rinçage à travers la bande de filtrage,
caractérisé en ce que dans le sens de passage de la bande de filtrage, en aval de la chambre (9), sur la face de la bande de filtrage (2) opposée au dispositif de réception (10), on prévoit près du caisson (12) au moins un dispositif d'aspiration (19) s'étendant transversalement sur la largeur de la bande de filtrage (2), pour le séchage de la bande de filtrage.

3. Dispositif pour la mise en oeuvre du procédé selon la revendication 1, en particulier dans des installations de filtrage par bande comportant une bande de filtrage (2) rotative ou réversible, constitué d'un dispositif de rinçage (7) agencé au-dessus de la bande de filtrage dans une chambre (9) ouverte du côté de la bande de filtrage, au moyen duquel un fluide de rinçage (11) sous pression est projeté sur et à travers la bande de filtrage, ainsi que d'un dispositif de réception (10) pour le fluide de rinçage agencé au-dessous de la bande de filtrage et de la chambre, qui forme conjointement avec la bande de filtrage reposant sur ses bords un caisson fermé (12) pourvu d'une sortie pour le fluide de rinçage, dans lequel est engendrée une dépression pour favoriser le passage du fluide de rinçage à travers la bande de filtrage,
caractérisé en ce que l'ouverture du côté de la bande de filtrage du caisson (12) du dispositif de réception, dans le sens de passage de la bande de filtrage (2), en aval du dispositif de rinçage (7), est plus grande que l'ouverture du côté de la bande de filtrage de la chambre (9) prévue au-dessus de la bande de fiitrage (2) et entourant le dispositif de rinçage (7).

4. Dispositif selon la revendication 2,
caractérisé en ce que le dispositif d'aspiration (19) est une barre d'aspiration, au-dessus de l'ouverture d'aspiration de laquelle est déplacée de façon étanche la bande de filtrage (2).

5. Dispositif selon l'une des revendications 2 à 4, caractérisé en ce qu'au moins le bord (17) du côté d'entrée du caisson (12) du dispositif de réception (10) est réalisé sous forme de galet de guidage (18) pour la bande de filtrage (2).

6. Dispositif selon l'une des revendications 2 à 5, caractérisé en ce que l'on prévoit comme fluide de rinçage, du liquide, de l'air ou un mélange d'air et de liquide.
